# FASCICULE DE BREVET EUROPEEN

(11) **EP 0 345 123 B1**
(45) Date de publication et mention de la délivrance du brevet: **12.01.1994**
(21) Numéro de dépôt: 89401428.1
(22) Date de dépôt: 25.05.1989
(51) Int. Cl.: B60L 11/18

(54) **Véhicule automobile à propulsion électrique**
Kraftfahrzeug mit elektrischem Antrieb
Electrically powered motor vehicle

(30) Priorité: 31.05.1988 FR 8807243
(43) Date de publication de la demande: 06.12.1989
(73) Titulaire: Andruet, Jean-Claude, I-20138 Coti Chiavari (IT)
(72) Inventeur: Andruet, Jean-Claude, I-20138 Coti Chiavari (IT)
(74) Mandataire: Peuscet, Jacques

(56) Documents cités:
- FR-A- 2 592 342
- GB-A- 1 396 416
- US-A- 3 899 041
- US-A- 4 042 055
- US-A- 4 223 255

## Description

L'invention a trait à un véhicule automobile propulsé électriquement et utilisable notamment comme voiture de golf.

On sait que les terrains de golf occupent des surfaces très importantes et que les distances que les joueurs doivent parcourir pour réaliser l'ensemble d'un parcours de golf peuvent être considérées comme excessives par certains joueurs surtout lorsque ceux-ci sont obligés de transporter l'ensemble de leur matériel de golf tout le long du parcours. On a donc déjà proposé de mettre à la disposition des joueurs de golf des petits véhicules automobiles, dont la propulsion est assurée électriquement pour éviter toute pollution atmosphérique et toute nuisance acoustique. Ces véhicules doivent avoir des caractéristiques particulières et, notamment, doivent permettre un déplacement en terrain accidenté, ce qui implique qu'ils doivent obligatoirement être munis d'un différentiel entre les roues du train moteur. Par ailleurs, pour donner à ces véhicules de bonnes caractéristiques de déplacement en terrain accidenté, il serait souhaitable de pouvoir disposer de véhicules à roues indépendantes et à quatre roues motrices. Selon les techniques de construction automobile classiques, il est tout-à-fait possible de satisfaire aux critères susmentionnés, mais cela conduit malheureusement à des voitures de golf d'un prix très élevé, de sorte que, généralement, pour maintenir le coût à un niveau raisonnable, on est amené à se contenter de caractéristiques moins satisfaisantes que celles que l'on pourrait atteindre de façon idéale.

On a déjà proposé des véhicules automobiles à propulsion électrique, chaque roue motrice étant entraînée par un moteur électrique : c'est le cas notamment des documents US-A-4 223 255 et GB-A-1 396 416. Malheureusement, les véhicules selon ces documents n'ont pas de caractéristiques de déplacement en terrain accidenté satisfaisantes.

On a déjà proposé, selon US-A-4 042 055, de relier en série deux moteurs identiques d'un même train pour réaliser un effet de différentiel à basse vitesse, mais, là encore, cela ne suffit pas pour résoudre le problème posé.

La présente invention a pour but de proposer un véhicule automobile à propulsion électrique, utilisable comme voiture de golf, ledit véhicule ayant un prix de revient modéré mais possédant néanmoins des caractéristiques de déplacement en terrain accidenté extrêmement satisfaisantes. Selon l'invention, on propose un véhicule automobile comportant au moins deux trains de roues, l'un avant et l'autre arrière, les deux trains de roues étant moteurs et directeurs, la propulsion dudit véhicule étant assurée par une source d'énergie électrique embarquée, chaque roue étant équipée d'un groupe moto-réducteur comportant un moteur électrique alimenté par la source d'énergie électrique, l'axe de sortie dudit groupe constituant l'axe de la roue correspondante, caractérisé par le fait que ledit groupe est relié au châssis du véhicule par deux éléments de suspension articulés d'un côté sur le groupe et de l'autre sur le châssis et que les deux moteurs d'une même train sont identiques et alimentés en série, et qu'une connexion comportant un interrupteur est établie entre les deux points médians situés entre les deux moteurs en série d'un même train pour réaliser un effet de différentiel.

Dès lors, si l'on met le véhicule en virage, l'un des moteurs de chaque train est entraîné à une vitesse supérieure à celle qu'il avait lorsque le véhicule se déplaçait en ligne droite et il en résulte, étant donné que le courant qui traverse les deux moteurs en série est le même, que l'autre moteur va être obligé de tourner moins vite puisque la somme des deux forces électromotrices des deux moteurs est constante et que celle du premier moteur a augmenté avec l'augmentation de la vitesse de rotation. Une connexion étant établie entre les deux points médians situés entre les deux moteurs en série d'un même train, dans ce cas, si l'une des roues du véhicule tourne dans le vide, la roue qui est diagonalement opposée est soumise à une augmentation de son couple d'entraînement, ce qui provoque un pivotement du véhicule qui permet de faciliter son dégagement et la reprise du contact au sol de la roue qui tournait dans le vide. Cette connexion peut éventuellement être prévue uniquement comme résultat d'une manoeuvre spéciale de l'utilisateur.

Dans un mode préféré de réalisation, chaque train de roues comporte deux roues symétriques par rapport au plan longitudinal médian du véhicule, les éléments de suspension étant des triangles de suspension ; avantageusement, l'articulation des triangles de suspension sur le groupe étant une rotule et celle sur le châssis étant un axe sensiblement parallèle à l'axe longitudinal du véhicule, le groupe étant lié, en un point non porté par la droite de jonction des centres des deux rotules, à un organe de direction.

On peut, bien entendu, prévoir qu'un organe de freinage soit interposé entre la roue et le carter du groupe moto-réducteur, l'un des éléments dudit organe étant solidaire dudit carter et l'autre étant solidaire de l'axe de roue, un système de freinage étant interposé entre les deux éléments précités ; les rotules d'articulation des triangles de suspension sur le groupe peuvent être portées par le carter du réducteur du groupe moto-réducteur.

La source d'énergie électrique embarquée est avantageusement une batterie et le moteur d'un groupe moto-réducteur est alors un moteur à courant continu ; ce moteur peut être un moteur à rotor induit bobiné, le stator inducteur comportant des aimants permanents.

Pour réaliser l'effet de différentiel, on peut prévoir que le boitier de direction du véhicule, manoeuvré par l'utilisateur, commande un ensemble électronique comportant deux sous-ensembles identiques affectés l'un aux deux roues droites et l'autre aux deux roues gauches du véhicule, l'un des deux sous-ensembles fournissant en virage sur les roues intérieures une alimentation électrique d'autant plus réduite que le virage est plus accentué, alors que l'autre maintient sur les roues extérieures une alimentation électrique correspondant au régime en ligne droite. De la sorte, selon l'angle de rotation du volant de direction, on affecte aux roues situées à l' intérieur du virage une alimentation réduite dans une proportion donnée, le taux de réduction étant fonction du rayon de courbure du virage et étant programmé à l'avance.

L'alimentation des moteurs peut avantageusement être effectuée par l'intermédiaire d'une pluralité de transistors branchés en parallèle, la conduction desdits transistors étant simultanée et étant commandée à une fréquence F pendant une fraction τ de la période 1/F de commande, τ étant compris entre 0 et 1 et étant une fonction croissante de la commande de l'accélérateur du véhicule.

Avantageusement, les bobinages des rotors des moteurs associés à chaque roue sont mis en court-circuit pendant la fraction (1 - τ) de la période de commande où l'alimentation des moteurs est coupée. De la sorte, en raison de la mise en court-circuit des bobinages rotor, on réalise un freinage moteur qui est d'autant plus important que le temps d'alimentation des moteurs dans chaque période est plus faible. La présence d'un tel frein moteur est particulièrement agréable pour la conduite du véhicule selon l'invention. On peut, par exemple, proposer que la mise en court-circuit des bobinages rotor soit effectuée grâce à au moins un transistor, qui est passant en opposition de phase par rapport à ceux qui assurent l'alimentation.

L'invention a également pour objet l'utilisation d'un véhicule, tel que ci-dessus défini comme chariot de golf.

Pour mieux faire comprendre l'objet de l'invention, on va en décrire maintenant, à titre d'exemples purement illustratifs et non limitatifs, plusieurs modes de réalisation représentés sur le dessin annexé.

Sur ce dessin :
- la figure 1 représente schématiquement, vue en plan, une première variante de réalisation d'un chariot de golf selon l'invention ;
- la figure 2A représente une vue en plan d'une roue du chariot de la figure 1 avec un arrachement partiel ;
- la figure 2B représente une élévation latérale de la roue de la figure 2A, selon IIB-IIB de la figure 2A ;
- la figure 3 représente, en perspective, les deux triangles de suspension associés à la roue de la figure 2 ;
- la figure 4 représente un schéma-bloc du circuit électronique de commande assurant la fonction différentielle pour le véhicule de la figure 1 ;
- la figure 5 représent un circuit électronique correspondant à une deuxième variante de réalisation permettant l'obtention d'un effet différentiel entre les roues d'un même train, les deux moteurs d'un même train de roues du véhicule selon l'invention étant alimentés en série ;
- la figure 6 représente le schéma-bloc d'un circuit électronique permettant l'obtention d'un frein moteur pour un véhicule comportant une alimentation du type de celle représentée sur la figure 5.

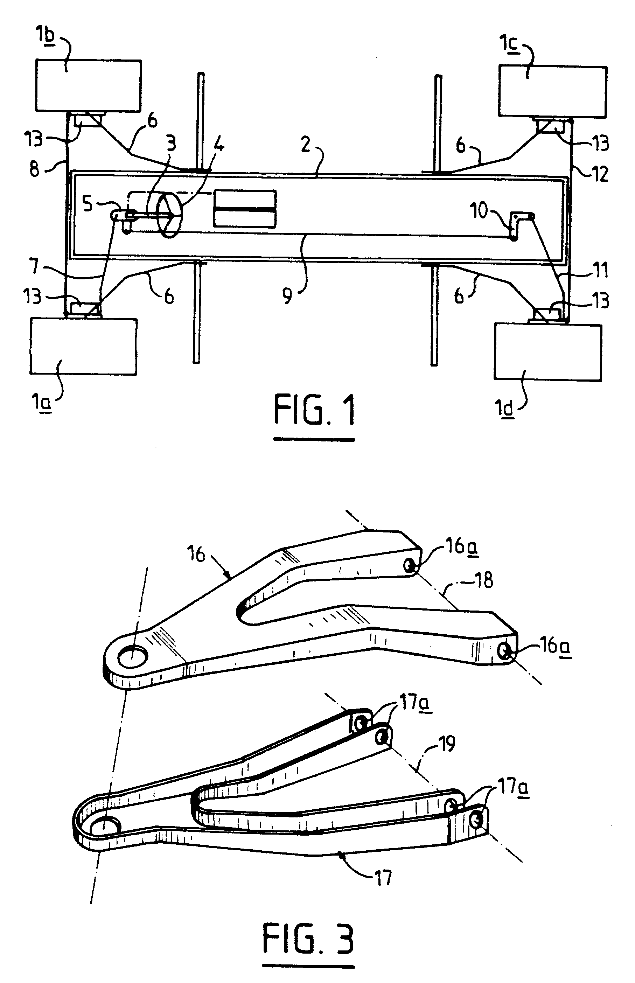

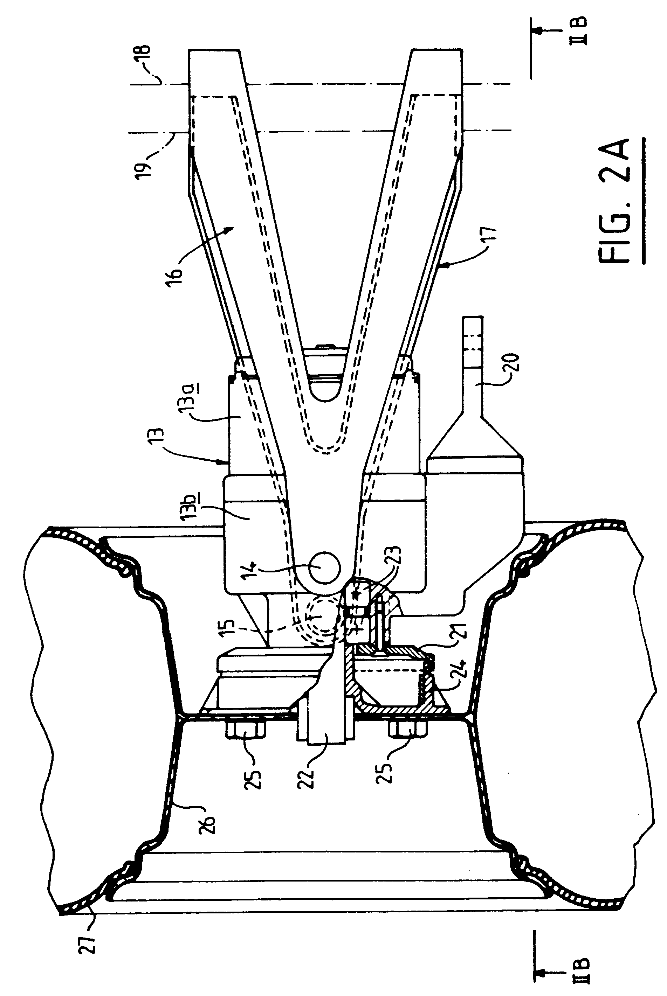

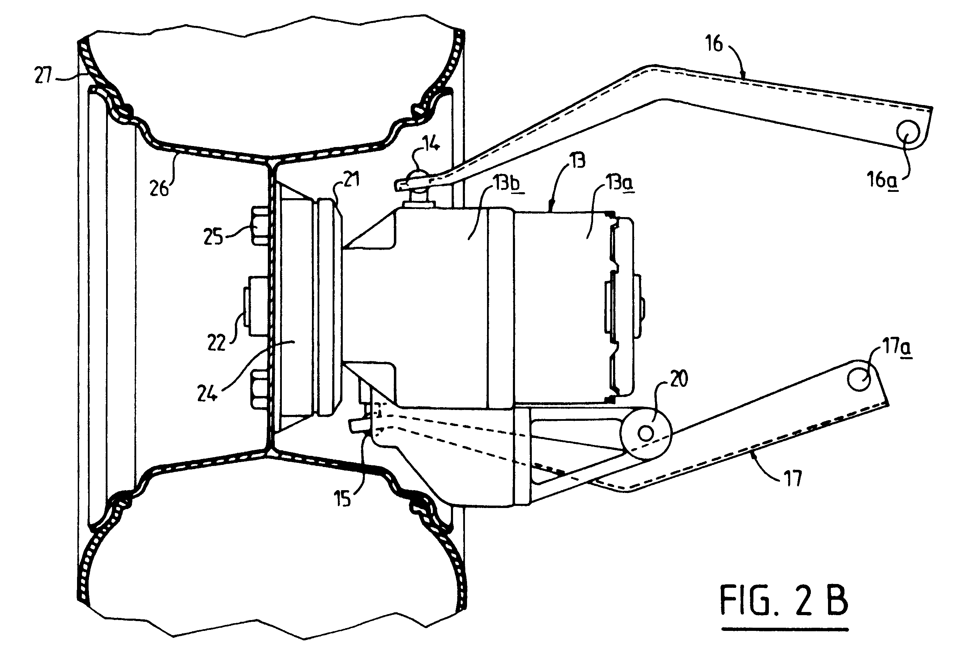

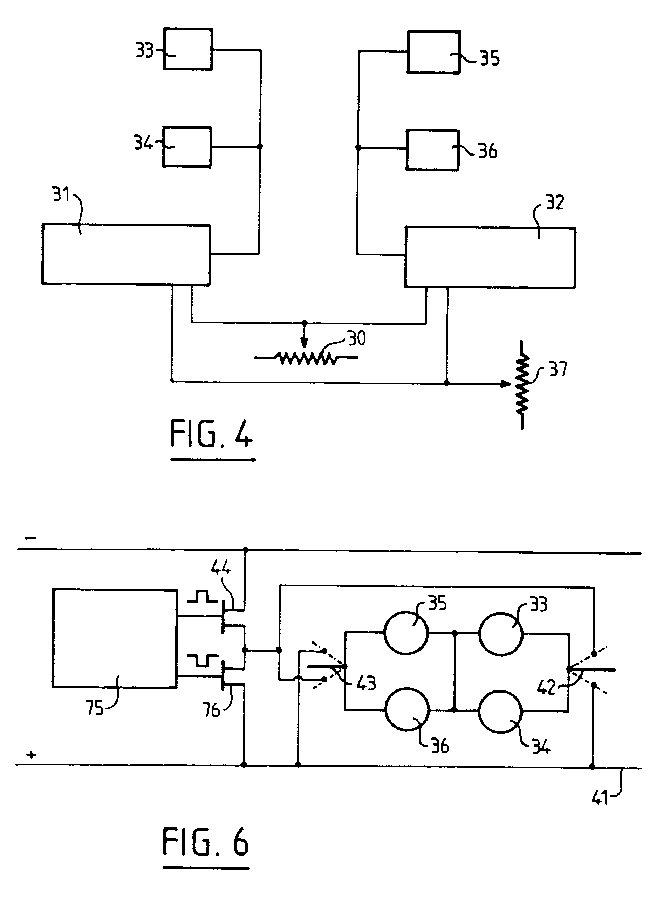

En se référant au dessin, on voit que l'on a désigné par 1a, 1b, 1c, 1d les quatres roues d'un chariot de golf, dont le châssis 2 porte une colonne de direction 3 manoeuvrée par un volant 4. La colonne de direction 3 commande un boîtier de direction 5. Chaque roue est reliée au châssis 2 par un moyen de suspension 6 représenté schématiquement sur la figure 1 mais en détail sur les figures 2A, 2B et 3. Chaque roue est commandée en direction par le boîtier 5 : cette commande est désignée par 7 pour la roue avant 1a et la direction de l'autre roue avant 1b est obtenue par une barre d'attelage transversale avant 8 ; le boîtier 5 manoeuvre par une liaison 9 une équerre pivotante 10̸ placée au niveau des roues arrière ; l'équerre 10̸ commande la roue 1d du train arrière par la liaison mécanique 11 et l'orientation est communiquée à la roue 1c par la barre d'attelage transversale arrière 12. On constate donc que ce véhicule a quatre roues indépendantes directrices.

Pour communiquer un mouvement à ce véhicule, on utilise sur chaque roue, un groupe moto-réducteur électrique 13, qui est solidaire de la roue et dont l'axe de sortie constitue l'axe de roue. L'alimentation électrique est assurée par une batterie embarquée sur le véhicule.

Chaque groupe moto-réducteur 13 est constitué d'un moteur électrique à courant continu 13a et d'un réducteur à engrenages 13b. Le carter extérieur du réducteur 13b porte, à sa partie supérieure et à sa partie inférieure, une rotule désignée par 14 et 15 respectivement. Les rotules 14 et 15 constituent les points d'attache sur les triangles de suspension supérieur 16 et inférieur 17; le côté de ces triangles de suspension qui est opposé aux rotules 14 et 15 est articulé sur le châssis du véhicule selon un axe 18 et 19 respectivement. Chaque triangle de suspension 16 et 17 est constitué de deux bras qui convergent vers le point d'attache des rotules 14 et 15 respectivement, les extrémités des deux bras qui sont opposées à la rotule servant à l'articulation sur le châssis 2 selon les axes 18 et 19 respectivement et comportant donc des passages d'arbres d'articulation désignés respectivement par 16a et 17a. Sur le dessin, les ressorts et amortisseurs de la suspension n'ont pas été représentés mais ils sont mis en place comme il est bien connu dans l'état de la technique. La ligne qui joint les centres des rotules 14, 15 est parallèle au plan défini par les axes d'articulation 18 et 19 de sorte qu'au cours du débattement des triangles de suspension 16 et 17 par rapport au châssis, la ligne qui joint les centres des rotules 14, 15 reste parallèle à un plan fixe ce qui permet de maintenir l'axe du groupe moto-réducteur 13 sensiblement parallèle au sol.

Comme il a été précédemment indiqué, les roues 1a et 1d sont commandées en direction à partir du boîtier de direction 5. Cette commande est réalisée en prévoyant une patte 20̸ solidaire du carter du réducteur 13b et disposée dans un plan sensiblement parallèle à celui qui est défini par la ligne des centres des rotules 14, 15 d'une part et l'axe du groupe moto-réducteur 13 d'autre part. Sur cette patte 20̸ vient s'accrocher une tringlerie de direction non représentée sur les figures 2A et 2B. De la sorte, en agissant sur ladite tringlerie, on peut faire pivoter l'axe du moto-réducteur 13 autour de l'axe défini par les centres des deux rotules 14 et 15, ce qui permet l'orientation de la roue. Pour les roues 1b et 1c, la tringlerie de commande qui vient coopérer avec la patte 20̸ est la barre d'attache transversale 8 ou 12 respectivement.

Sur le carter du réducteur 13b est fixé un plateau 21 disposé concentriquement autour de l'arbre de sortie 22 du moto-réducteur ; l'arbre de sortie 22 est supporté de façon connue dans le carter du réducteur 13b par des roulements 23. Sur l'arbre de sortie 22 est fixé un flasque mobile 24 ; le plateau 21 porte des organes de freinage (non représentés) qui coopèrent avec le flasque mobile 24 de façon connue ; le représentation adoptée sur les figures 2A et 2B correspond à un système de freinage à mâchoires mais un dispositif de freinage à disque pourrait bien entendu être utilisé. Sur le flasque mobile 24 est fixée, par des boulons 25, une jante de roue 26 qui supporte un pneumatique 27.

On voit que le véhicule, qui vient d'être décrit, comporte quatre roues directrices à suspension indépendante, chacune de ces roues étant motrice puisque l'axe de roue est l'axe de sortie d'un moto-réducteur 13. Bien entendu, il est possible de faire en sorte que le train arrière du véhicule ne soit pas directeur. Néanmoins, il faudra, dans tous les cas, prévoir en fonction du trajet suivi par le véhicule une harmonisation appropriée des alimentations électriques des moto-réducteurs associés aux quatre roues. En effet, pour un déplacement en ligne droite, les vitesses de rotation des axes 22 des quatre roues doivent être les mêmes ; par contre, pour un déplacement en virage, il est nécessaire de réaliser un effet de différentiel pour que, pour un train de roues, la vitesse de rotation de la roue intérieure du virage soit plus faible que la vitesse de rotation de la roue extérieure.

Pour obtenir l'effet de différentiel désiré, on propose, selon l'invention, plusieurs variantes de réalisation.

La première variante est représentée schématiquement sur les figures 1 et 4. Dans cette variante, le boîtier de direction 5 commande, par un potentiomètre 30̸, deux variateurs électroniques identiques 31 et 32 ; sur la sortie du variateur 31 sont branchés en parallèle les moteurs des roues avant et arrière gauches du véhicules ; sur la sortie du variateur électronique 32 sont branchés en parallèle les moteurs avant et arrière droits du véhicule. Bien entendu, ces moteurs sont ceux qui, dans la description précédente, ont été désignés par la référence unique 13a ; mais, pour plus de clarté, dans la description détaillée de cette variante comme dans celle des deux autres variantes suivantes, on a affecté des références différentes à chacun de ces moteurs ; c'est ainsi que l'on a désigné par 33 et 34 les moteurs avant gauche et arrière gauche respectivement et par 35 et 36 les moteurs avant droit et arrière droit respectivement. Selon la rotation du volant du véhicule, le boîtier de direction 5 déplace dans un sens ou dans l'autre, le curseur du rhéostat 30 ce qui, à partir d'une position d'équilibre correspondant à la marche en ligne droite, favorise l'une ou l'autre des sorties des deux variateurs 31 et 32 selon un programme pré-établi qui correspond à l'effet de différentiel recherché. En d'autres termes, selon l'angle de rotation du volant, qui correspond à un rayon de courbure de virage donné, on programme la différence à établir entre les courants d'alimentation des moteurs 33 et 34 d'une part et 35 et 36 d'autre part. La vitesse globale du véhicule est commandée par l'accélérateur, qui agit sur un rhéostat 37 réglant l'intensité d'alimentation des moteurs indépendamment de toute réduction affectée par l'un ou l'autre des variateurs 31 ou 32.

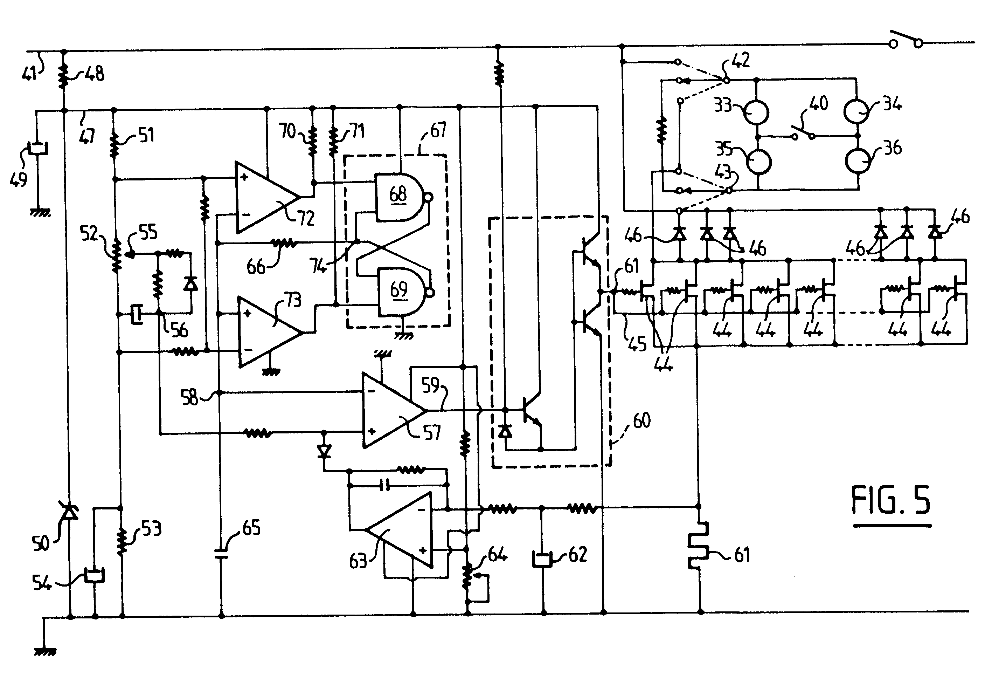

Selon une deuxième variante de réalisation permettant d'obtenir l'effet de différentiel, on a proposé d'alimenter en série les deux moteurs d'un même train du véhicule. Le schéma du circuit électronique permettant la mise en oeuvre de cette variante est représenté sur la figure 5 ; on voit que l'on a conservé les références 33 et 35 pour les deux moteurs avant gauche et droit et 34 et 36 pour les deux moteurs arrière gauche et droit respectivement. On a établi par un interrupteur 40̸ une connexion entre les points milieu entre les moteurs 33 et 35, d'une part, et 34 et 36, d'autre part. Les moteurs 33 à 36 sont tous identiques : il s'agit de moteurs à induit bobiné comportant un stator à aimants permanents ; pour de tels moteurs le couple est proportionnel au courant. Le fait de brancher en série les deux moteurs avant et les deux moteurs arrière permet d'avoir de façon automatique un effet de différentiel. En effet, si l'on tourne le volant de direction alors que le véhicule se déplace en ligne droite, l'un des moteurs de chaque train va tourner plus vite que l'autre de sorte que sa force électromotrice va augmenter et étant donné que la somme des forces électromotrices des deux moteurs alimentés en série est nécessairement constante, l'autre moteur du même train va avoir une chute de force électromotrice et donc une réduction de sa vitesse de rotation. Cet effet de différentiel automatique se produit sur les deux trains du véhicule. Si l'on assure la fermeture de l'interrupteur 40̸ et si l'une des roues du véhicule tourne dans le vide par suite d'un accident du terrain, le courant qui n'est plus absorbé par la roue qui tourne dans le vide est repris par le moteur de la roue diagonalement opposée ce qui permet de dégager le véhicule en cas de passage difficile.

Sur la figure 5, on a désigné par 41 la ligne d'alimentation positive en courant continu 24 volts, la borne négative de la batterie d'alimentation étant branchée à la masse. L'alimentation des moteurs du véhicule en vue de la marche avant ou de la marche arrière est obtenue au moyen des interrupteurs 42 et 43, qui sont manoeuvrés simultanément. Dans la position représentée en trait plein sur la figure 5, les interrupteurs 42 et 43 sont dans la position d'arrêt, puisque les bobinages des moteurs sont mis en court-circuit. Dans la position qui est représentée en trait mixte, les moteurs sont alimentés en marche avant ; dans la position représentée en trait pointillé, les moteurs sont alimentés en marche arrière. L'alimentation est assurée entre, d'une part, la ligne 41 et, d'autre part, un ensemble de transistors 44 disposés en parallèle. Il est nécessaire de disposer en parallèle un certain nombre de transistors 44 compte-tenu des limitations de courant dans ces transistors et de la consommation des moteurs du véhicule ; si l'on doit consommer 10̸0̸ ampères au total, il faut au moins sept transistors de type MOS en parallèle puisque chacun ne peut supporter qu'environ 15 ampères. On commande tous les transistors 44 par la tension amenée sur la ligne 45 de façon que ces transistors ne soient passants que pendant une fraction du temps. En d'autres termes, on va piloter les transistors 44 à une certaine fréquence et, dans chaque période, les transistors ne seront passants que pendant une fraction de période ; en faisant varier cette fraction, on obtiendra un courant moyen d'alimentation qui sera variable depuis zéro jusqu'à un maximum ce qui permet de parfaitement réguler la vitesse de déplacement du véhicule en agissant sur la fraction de période pendant laquelle les transistors 44 sont passants. Les bobinages d'induit des moteurs 33 à 36 lissent le courant haché en raison de leur self, de sorte que la vitesse de sortie des moteurs correspond à la valeur moyenne du courant elle-même fonction du taux de hachage dans chaque période.

On a disposé des diodes 46 en parallèle aux bornes des moteurs 33 à 36 ; ces diodes sont des diodes du type SCHOTKY et elles sont utiles pour éviter une perte d'énergie à chaque coupure du courant en sortie des transistors 44. En effet, étant donné que l'on réalise l'alimentation des moteurs par un courant haché, à chaque coupure du courant, le bobinage induit des moteurs constitue une self qui se décharge et qu'il faudra recharger au moment où l'on ré-établira le courant d'alimentation. Pour éviter cette décharge, on prévoit, de façon connue, une diode de roue libre et les diodes SCHOTKY sont intéressantes à cet effet car elles ont un seuil bas et une grande rapidité de conduction.

A partir de la ligne 41, alimentée en 24 volts, on réalise une ligne 47 sur laquelle on dispose d'une tension de 12 volts stabilisée ; ceci est obtenu en reliant la ligne 47 à la ligne 41 par une résistance 48 et en reliant la ligne 47 à la masse par un condensateur 49 et une diode Zenner 50̸ disposés en parallèle. Entre la ligne 47 et la masse, on dispose en série trois résistances équivalentes 51, 52, 53 ; on prévoit un condensateur 54 aux bornes de la résistance 53. La résistance 52 est associée à un curseur 55 pour constituer un rhéostat ; le curseur 55 est manoeuvré par l'accélérateur du véhicule ; s'il est en position basse sur la figure 5, il permet d'avoir au point 56 du schéma une tension de 4 volts ; s'il est en position haute sur le schéma, il permet d'obtenir au point 56 une tension de 8 volts. La tension obtenue au point 56 est envoyée sur l'entrée positive d'un comparateur 57 sur l'entrée négative duquel on envoie une tension en forme de dents triangulaires qui varie entre 4 et 8 volts, ladite tension étant obtenue, comme il sera décrit plus loin, au point 58 du schéma. La tension en dents triangulaires a une période P ; pendant une partie de cette période, la valeur de la tension obtenue au point 58 du schéma est supérieure à celle de la tension obtenue au point 56 et, dans ce cas, on obtient en sortie du comparateur 57 une tension, alors que pendant le reste de la période cette sortie est à la tension zéro. On obtient donc sur la sortie 59 du comparateur 57 une tension en créneaux rectangulaires dont le taux de hachage est fonction de la position du curseur 55 et, par conséquent, de l'accélérateur du véhicule. Cette tension en créneaux 59 est envoyée sur un circuit à transistors désigné par 60̸ dans son ensemble, ledit circuit ayant pour rôle d'amplifier en courant le signal qu'il reçoit de la sortie 59 ; le circuit 60̸ fournit donc en sortie au point 61, c'est-à-dire sur les grilles des transistors 44,, un signal en créneaux rectangulaires ayant la période P et ayant une valeur suffisante pour commander les transistors 44.

Le courant d'alimentation des moteurs 33 à 36 est repéré en prélevant la tension aux bornes d'une résistance 61 interposée entre les transistors 44 et la masse. La valeur moyenne de cette tension est obtenue grâce à un condensateur 62 et elle est envoyée sur l'entrée négative d'un comparateur 63. Sur l'entrée positive de ce comparateur 63, on applique une tension de consigne obtenue par un rhéostat 64. A la sortie du comparateur 63, on obtient une tension que l'on fait agir sur l'entrée positive du comparateur 57 pour limiter le courant d'alimentation des moteurs du véhicule en fonction de la valeur de consigne donnée par le rhéostat 64.

On va décrire maintenant la façon, dont on obtient la tension en dents triangulaires au point 58 du circuit. Pour ce faire, on charge et on décharge un condensateur 65 disposé entre la masse et le point 58 du circuit, cette charge et cette décharge s'effectuant à travers une résistance 66 branchée entre le point 58 et la sortie d'un bi-stable 67. Le bi-stable 67 est constitué par deux portes NAND 68 et 69 bouclées entre elles c'est-à-dire que la sortie de l'une est reliée à l'une des entrées de l'autre ; l'une de ces liaisons entrée-sortie constitue la sortie du bi-stable 67 et les bornes des deux portes 68 et 69, qui ne servent pas au bouclage, sont reliées à la ligne 47 par l'intermédiaire de deux résistances 70̸ et 71 dont la valeur est égale à celle de la résistance 66. Le point 58 est relié à l'entrée négative d'un comparateur 72 et à l'entrée positive d'un comparateur 73 ; les sorties des comparateurs 72 et 73 sont reliées respectivement aux bornes des portes 68 et 69, qui sont connectées à la ligne 47. La borne positive du comparateur 72 est reliée au point médian situé entre les résistances 51 et 52 ; l'entrée négative du comparateur 73 est reliée au point médian situé entre les résistances 52 et 53.

Le fonctionnement de ce montage est simple à expliciter : si la sortie 74 du bi-stable 67 (qui est relié à la résistance 66) est à l'état haut, le condensateur 65 se charge jusqu'à ce que la tension sur l'entrée négative du comparateur 72 dépasse celle qui est appliquée sur l'entrée positive : au moment où se fait ce dépassement, la sortie du comparateur 72 passe à zéro, le bi-stable 67 bascule vers le point bas et la tension à la sortie 74 du bi-stable vient à l'état bas ; il en résulte que le condensateur 65 se décharge. Quand la tension appliquée sur l'entrée positive du comparateur 73 devient inférieure à celle qui est appliquée sur l'entrée négative, la tension sur la sortie du comparateur 73 devient nulle et par conséquent le bi-stable 67 rebascule, ce qui ramène à l'état d'où l'on est parti initialement dans cette explication. On voit donc que la tension au point 58 du circuit varie entre les tensions des points médians compris entre les résistances 51 et 52 d'une part et 52 et 53 d'autre part c'est-à-dire entre 8 et 4 volts. La période de la tension triangulaire ainsi obtenue est fonction du temps de charge du condensateur 65 et cette tension triangulaire symétrique est appliquée sur l'entrée négative du comparateur 57, comme il a été expliqué précédemment.

On voit donc que le circuit représenté sur la figure 5 permet, en fonction de la position du curseur 55 lié à l'accélérateur du véhicule, d'obtenir sur les moteurs 33 à 36 un courant, dont la valeur moyenne varie entre zéro et la valeur maximum imposée par le rhéostat 64, l'effet de différentiel étant obtenu de façon automatique par le branchement en série des deux moteurs d'un même train.

Sur la figure 6, on a représenté schématiquement une troisième variante d'alimentation des moteurs 33 à 36 du véhicule selon l'invention. Cette variante dérive de celle de la figure 5 et prévoit, de la même façon, le branchement en série des deux moteurs d'un même train pour obtenir l'effet de différentiel ; mais elle permet, en outre, d'assurer une fonction de frein moteur. En effet, avec une alimentation du type précédent, si le véhicule est en cours de déplacement et qu'on amène l'accélérateur dans la position minimum, le courant d'alimentation des moteurs devient nul mais aucun freinage ne se manifeste, ce qui oblige, si nécessaire, à ralentir le véhicule par les dispositifs de freinage 21, 24 associés à chaque roue. On peut cependant créer un frein moteur électriquement. Sur la figure 6, on a désigné par la référence 75 un circuit d'alimentation du type de celui qui est représenté sur la figure 5 ; le circuit 75 alimente les moteurs 33 à 36 par l'intermédiaire de transistors MOS 44 comme il a été précédemment décrit ; sur la figure 6, on a représenté un seul transistor d'alimentation 44 pour simplifier le schéma mais, en fait, on en utilise, bien entendu, une pluralité comme précédemment indiqué. On retrouve, dans le schéma de la figure 6, les deux interrupteurs 42 et 43 interposés respectivement entre les moteurs et la ligne 41 d'alimentation positive, d'une part, et les moteurs et les transistors d'alimentation 44, d'autre part. Comme précédemment, les interrupteurs 42 et 43 ont une position correspondant à la marche avant représentée en trait mixte et une position correspondant à la marche arrière représentée en trait pointillé.

Par rapport au circuit précédent, on supprime les diodes 46 et on les remplace par des transistors 76 de type MOS analogues aux transistors 44 et en nombre équivalent. Sur la figure 6, on a représenté uniquement un transistor 76 pour plus de simplicité, mais en pratique on en utiliserait une pluralité montés en parallèle. Les transistors 76 sont en opposition de phase par rapport aux transistors 44 c'est-à-dire qu'ils sont passants quand les transistors 44 sont bloqués et inversement. Les transistors 76 relient la sortie de l'interrupteur 43 à la ligne 41 : il en résulte que lorsqu'ils sont passants, les transistors 76 assurent une mise en court-circuit des bobinages induits des moteurs 33 à 36, ce qui,, bien entendu, freine le moteur pendant le temps durant lequel les transistors 76 sont passants. En d'autres termes, pendant chaque période de la tension en dents triangulaires obtenue au point 58 du circuit 75, il y a une fraction de période pendant laquelle les moteurs 33 à 36 sont alimentés et, pendant la fraction complémentaire de la période, lesdits moteurs se trouvent freinés par court-circuit d'induit. Il en résulte que, si l'utilisateur du véhicule relâche son action sur l'accélérateur, la phase de freinage deviendra prépondérante sur la phase de propulsion et le freinage sera permanent s'il n'y a plus du tout d'action sur l'accélérateur, ce qui correspond à un effet de frein moteur.

Il convient, d'ailleurs, de préciser que l'on pourrait envisager une récupération d'énergie dans les phases de freinage au moyen d'un onduleur.

Il est bien entendu que les modes de réalisation ci-dessus décrits ne sont aucunement limitatifs et pourront donner lieu à toute modification désirable, sans sortir pour cela du cadre de l'invention tel que défini par les revendications. En particulier, l'invention pourra trouver son application pour des chariots de golf ou des véhicules de tous types, par exemple pour le transport des personnes ou des bagages dans des hôtels. Ces véhicules pourront avoir plus de deux trains de roues notamment s'il s'agit de véhicules tout terrain.

## Revendications

1. Véhicule automobile comportant au moins deux trains de roues (1a, 1b, 1c, 1d), l'un avant et l'autre arrière, les deux trains de roues étant moteurs et directeurs, la propulsion dudit véhicule étant assurée par une source d'énergie électrique embarquée, chaque roue étant équipée d'un groupe moto-réducteur (13) comportant un moteur électrique alimenté par la source d'énergie électrique, l'axe de sortie (22) dudit groupe (13) constituant l'axe de la roue correspondante, caractérisé par le fait que ledit groupe (13) est relié au châssis (2) du véhicule par deux éléments de suspension (16, 17) articulés d'un côté sur le groupe (13) et de l'autre sur le châssis (2) et que les deux moteurs (33, 35 ; 34, 36) d'une même train sont identiques et alimentés en série, et qu'une connexion comportant un interrupteur (40) est établie entre les deux points médians situés entre les deux moteurs en série d'un même train pour réaliser un effet de différentiel.

2. Véhicule automobile selon la revendication 1, caractérisé par le fait que chaque train de roues comporte deux roues symétriques par rapport au plan longitudinal médian du véhicule, et que les éléments de suspension sont des triangles de suspension.

3. Véhicule automobile selon la revendication 2, caractérisé par le fait que l'articulation des triangles de suspension (16, 17) sur le groupe (13) étant une rotule (14, 15) et celle sur le châssis (2) étant un axe (18, 19) sensiblement parallèle à l'axe longitudinal du véhicule, le groupe est lié, en un point (20) non porté par la droite de jonction des centres des deux rotules, à un organe de direction.

4. Véhicule automobile selon l'une des revendications 1 à 3, caractérisé par le fait qu'un organe de freinage est interposé entre la roue et le carter du groupe moto-réducteur, l'un des éléments (21) dudit organe étant solidaire dudit carter et l'autre (24) étant solidaire de l'axe (22) de roue, un système de freinage étant interposé entre les deux éléments précités.

5. Véhicule automobile selon la revendication 3, caractérisé par le fait que les rotules (14, 15) d'articulation des triangles (16, 17) de suspension sur le groupe (13) sont portées par le carter du réducteur (13b) du groupe moto-réducteur (13).

6. Véhicule automobile selon l'une des revendications 1 à 5, caractérisé par le fait que la source d'énergie électrique embarquée est une batterie et le moteur (13a) d'un groupe moto-réducteur est un moteur à courant continu.

7. Véhicule automobile selon la revendication 6, caractérisé par le fait que le moteur (13a) d'un groupe moto-réducteur (13) est un moteur ayant un rotor induit bobiné et un stator inducteur à aimants permanents.

8. Véhicule automobile selon la revendication 1, caractérisé par le fait que le boîtier de direction (5) du véhicule, manoeuvré par l'utilisateur, commande un ensemble électronique comportant deux sous-ensembles identiques (31, 32) affectés l'un aux deux roues droites et l'autre aux deux roues gauches du véhicule, l'un des deux sous-ensembles fournissant en virage sur les roues intérieures une alimentation électrique d'autant plus réduite que le virage est plus accentué, alors que l'autre maintient sur les roues extérieures une alimentation électrique correspondant au régime en ligne droite.

9. Véhicule automobile selon la revendication 1, caractérisé par le fait que l'alimentation des moteurs (33 à 36) est effectuée par l'intermédiaire d'une pluralité de transistors (44) branchés en parallèle, la conduction desdits transistors étant simultanée et étant commandée à une fréquence F pendant une fraction τ de la période (1/F) de commande, τ étant compris entre 0 et 1 et étant une fonction croissante de la commande de l'accélérateur du véhicule.

10. Véhicule automobile selon les revendications 7 et 9 prises en combinaison, caractérisé par le fait que pendant la fraction (1 - τ) de la période de commande, où l'alimentation des moteurs (33 à 36) est coupée, les bobinages des rotors sont mis en court-circuit.

11. Véhicule automobile selon la revendication 10, caractérisé par le fait que la mise en court-circuit des bobinages des rotors s'effectue grâce à au moins un transistor (76), qui est passant en opposition de phase par rapport à ceux (44) qui assurent l'alimentation des moteurs (33 à 36).

12. Utilisation d'un véhicule selon l'une des revendications 1 à 11 comme voiture de golf.

## Claims

1. Motor vehicle comprising at least two sets of wheels (1a, 1b, 1c, 1d), one the front set and the other the rear set, the two sets of wheels being driven and steered, the propulsion of the said vehicle being provided by an onboard electric power source, each wheel being equipped with a gear-motor assembly (13) comprising an electric motor supplied by the electric power source, the output shaft (22) of the said assembly (13) constituting the axle of the corresponding wheel, characterized in that the said assembly (13) is connected to the chassis (2) of the vehicle via two suspension elements (16, 17) articulated on one side to the assembly (13) and on the other side to the chassis (2) and in that the two motors (33, 35; 34, 36) of the one same set are identical and supplied in series, and in that a connection comprising a switch (40) is made between the two central points located between the two motors in series of the one same set in order to produce a differential effect.

2. Motor vehicle according to Claim 1, characterized in that each set of wheels comprises two wheels which are symmetric in relation to the central longitudinal plane of the vehicle and in that the suspension elements are suspension wishbones.

3. Motor vehicle according to Claim 2, characterized in that as the articulation of the suspension wishbones (16, 17) to the assembly (13) is a ball joint (14, 15) and that to the chassis (2) is an axis (18, 19) substantially parallel to the longitudinal axis of the vehicle, the assembly is linked, at a point (20) not lying on the straight line joining the centres of the two ball joints, to a steering member.

4. Motor vehicle according to one of Claims 1 to 3, characterized in that a braking member is interposed between the wheel and the casing of the gear-motor assembly, one of the elements (21) of the said member being held fast to the said casing and the other (24) being held fast to the wheel axle (22), a braking system being interposed between the two aforementioned elements.

5. Motor vehicle according to Claim 3, characterized in that the ball joints (14, 15) for articulating the suspension wishbones (16, 17) to the assembly (13) are supported by the casing of the reduction gear (13*b*) of the gear-motor assembly (13).

6. Motor vehicle according to one of Claims 1 to 5, characterized in that the onboard electric power source is a battery and the motor (13a) of a gear-motor assembly is a DC motor.

7. Motor vehicle according to Claim 6, characterized in that the motor (13a) of a gear-motor assembly (13) is a motor having a wound induced rotor and an inducing stator with permanent magnets.

8. Motor vehicle according to Claim 1, characterized in that the steering-gear box (5) of the vehicle, operated by the user, controls an electronic system comprising two identical sub-systems (31, 32) which are assigned one to the two right-hand wheels and the other to the two left-hand wheels of the vehicle, one of the two sub-systems providing, when turning, the inside wheels with electric power which is the more reduced the tighter the turning, while the other maintains an electric supply to the outside wheels corresponding to travelling in a straight line.

9. Motor vehicle according to Claim 1, characterized in that the motors (33 to 36) are supplied via a plurality of transistors (44) connected up in parallel, the said transistors being turned on simultaneously and at a frequency F for a fraction τ of the control period (1/F), τ lying between 0 and 1 and being an increasing function of the control of the throttle of the vehicle.

10. Motor vehicle according to Claims 7 and 9 taken in combination, characterized in that, during the fraction (1 - τ) of the control period, when the supply to the motors (33 to 36) is cut off, the windings of the rotors are short-circuited.

11. Motor vehicle according to Claim 10, characterized in that the windings of the rotors are short-circuited by virtue of at least one transistor (76) which is conducting in phase opposition with respect to those (44) which provide the supply to the motors (33 to 36).

12. Use of a vehicle according to one of Claims 1 to 11 as a golf buggy.

## Patentansprüche

1. Kraftfahrzeug mit mindestens zwei Radsätzen (1a, 1b, 1c, 1d), der eine hinten und der andere vorne, wobei es sich bei den beiden Radsätzen um angetriebene und gelenkte Radsätze handelt und der Antrieb des Fahrzeugs von einer elektrischen Stromquelle im Fahrzeug bereitgestellt wird und jedes Rad mit einem Motor-Getriebe-Aggregat (13) ausgestattet ist, das einen von der elektrischen Stromquelle gespeisten Elektromotor umfaßt, und die Abtriebswelle (22) des Aggregats (13) die Achse des entsprechenden Rades bildet, dadurch gekennzeichnet, daß das Aggregat (13) über zwei Aufhängungselemente (16, 17), die auf der einen Seite am Aggregat (13) und auf der anderen Seite am Fahrgestell (2) angelenkt sind, mit dem Fahrgestell (2) des Fahrzeugs verbunden ist und daß die beiden Motoren (33, 35; 34, 36) desselben Satzes gleich sind und in Reihe gespeist werden und daß zur Erzielung einer Differentialwirkung eine einen Schalter (40) umfassende Verbindung zwischen den beiden mittleren Punkten hergestellt wird, die sich zwischen den beiden in Reihe geschalteten Motoren desselben Satzes befinden.

2. Kraftfahrzeug nach Anspruch 1, dadurch gekennzeichnet, daß jeder Radsatz zwei zur mittleren Längsebene des Fahrzeugs symmetrische Räder umfaßt und daß es sich bei den Aufhängungselementen um Aufhängungs-Querlenker handelt.

3. Kraftfahrzeug nach Anspruch 2, dadurch gekennzeichnet, daß das Aggregat an einem Punkt (20) mit einem Lenkglied verbunden ist, der nicht auf der die Mittelpunkte der beiden Kugelgelenke verbindenden Geraden liegt, wobei es sich bei der Gelenkverbindung des Aufhängungs-Querlenkers (16, 17) mit dem Aggregat (13) um ein Kugelgelenk (14, 15) und bei der mit dem Fahrgestell (2) um eine Achse (18, 19) handelt, die im wesentlichen parallel zur Längsachse des Fahrzeugs verläuft.

4. Kraftfahrzeug nach einem der Ansprüche 1 bis 3, dadurch gekennzeichnet, daß zwischen dem Rad und dem Gehäuse des Motor-Getriebe-Aggregats ein Bremsglied angeordnet ist, wobei eines der Elemente (21) des Glieds fest mit dem Gehäuse und das andere (24) fest mit der Achse (22) des Rads verbunden und eine Bremsanlage zwischen den beiden obengenannten Elementen angebracht ist.

5. Kraftfahrzeug nach Anspruch 3, dadurch gekennzeichnet, daß die Kugelgelenke (14, 15) zur Gelenkverbindung der Querlenker (16, 17) der Aufhängung mit dem Aggregat (13) von dem Gehäuse des Untersetzungsgetriebes (13b) des Motor-Getriebe-Aggregats (13) getragen werden.

6. Kraftfahrzeug nach einem der Ansprüche 1 bis 5, dadurch gekennzeichnet, daß es sich bei der elektrischen Stromquelle im Fahrzeug um eine Batterie und bei dem Motor (13a) eines Motor-Getriebe-Aggregats um einen Gleichstrommotor handelt.

7. Kraftfahrzeug nach Anspruch 6, dadurch gekennzeichnet, daß es sich bei dem Motor (13a) eines Motor-Getriebe-Aggregats (13) um einen Motor handelt, der einen induzierten Schleifringläufer und einen induzierenden Ständer mit Dauermagneten aufweist.

8. Kraftfahrzeug nach Anspruch 1, dadurch gekennzeichnet, daß das von dem Benutzer bediente Lenkgehäuse (5) des Fahrzeugs ein elektronisches System steuert, das zwei gleiche Untersysteme (31, 32) umfaßt, von denen das eine den beiden rechten Rädern und das andere den beiden linken Rädern des Fahrzeugs zugeordnet ist, wobei das eine der beiden Untersysteme beim Kurvenfahren die Innenräder mit elektrischer Leistung versorgt, die um so geringer ist, je enger die Kurve ist, während das andere eine elektrische Leistungsversorgung der Außenräder aufrechterhält, die dem Fahren auf einer Geraden entspricht.

9. Kraftfahrzeug nach Anspruch 1, dadurch gekennzeichnet, daß die Motoren (33 bis 36) über mehrere parallelgeschaltete Transistoren (44) versorgt werden, wobei die Transistoren gleichzeitig eingeschaltet werden, und zwar bei einer Frequenz F während eines Anteils τ der Steuerperiode (1/F), wobei τ zwischen 0 und 1 liegt und in Abhängigkeit der Steuerung des Gaspedals des Fahrzeugs ansteigt.

10. Kraftfahrzeug nach den Ansprüchen 7 und 9 zusammengenommen, dadurch gekennzeichnet, daß während des Anteils (1 - τ) der Steuerperiode, wenn die Versorgung der Motoren (33 bis 36) unterbrochen ist, die Wicklungen der Läufer kurzgeschlossen werden.

11. Kraftfahrzeug nach Anspruch 10, dadurch gekennzeichnet, daß die Wicklungen der Läufer durch mindestens einen Transistor (76) kurzgeschlossen werden, der gegenüber denen (44), die die Motoren (33 bis 36) versorgen, in Gegenphase leitet.

12. Verwendung eines Fahrzeugs nach einem der Ansprüche 1 bis 11 als Golfwagen.
